# EUROPEAN PATENT APPLICATION

(11) **EP 4 553 736 A1**
(43) Date of publication of application: **14.05.2025**
(21) Application number: 23849241.7
(22) Date of filing: 26.07.2023
(51) Int. Cl.: G06Q 20/36

(54) **SETTLEMENT METHOD AND APPARATUS BASED ON DIGITAL CURRENCY WALLET SYSTEM, AND WALLET SYSTEM**

(30) Priority: 05.08.2022 CN 202210938660
(71) Applicant: Digital Currency Institute, The People's Bank of China, Beijing 100071 (CN); Shenzhen Financial Technology Institute (Financial Technology Institute, PBC), Shenzhen, Guangdong 518046 (CN)
(72) Inventor: MU,Changchun, Beijing 100071 (CN); LYU, Yuan, Beijing 100071 (CN); ZHANG, Zhan, Beijing 100071 (CN); ZHANG, Mingming, Beijing 100071 (CN); WANG, Huan, Beijing 100071 (CN); WU, Yue, Beijing 100071 (CN)
(74) Representative: Winter, Brandl - Partnerschaft mbB
(86) International application number: PCT/CN2023/109210
(87) International publication number: WO 2024/027533

(57) **Abstract**

The present disclosure relates to the technical field of computers, and discloses a settlement method and apparatus based on a digital currency wallet system, and the wallet system. A specific implementation of the method includes: opening an umbrella-top wallet and one or more umbrella-bottom wallets corresponding to the umbrella-top wallet; receiving a collected digital currency by using the umbrella-top wallet, and top-to-bottom fund transferring the collected digital currency to the one or more umbrella-bottom wallets; and settling a fund to one or more umbrella-bottom entities in response to one or more settlement requests.

## Description

### Cross-Reference to Related Application

The present application claims priority to Chinese patent application No. 202210938660.9 filed on August 5, 2022, the entire content of which is incorporated herein by reference.

### Technical Field

The present disclosure relates to the technical field of computers, in particular to a settlement method and apparatus based on a digital currency wallet system, and the digital currency wallet system.

### Background

After years of exploration and development in the field of electronic payment, a relatively mature payment solution system has been formed. However, when funds are top-to-bottom fund transferred and settled between entities with frequent fund transactions, bank accounts of each entity are usually opened one by one, and funds are transferred step by step among multi-level entities, so that the problems such as high transaction costs, long settlement cycle, frequent manual operations and high operational risks are caused, and the efficiency of fund settlement needs to be improved.

### SUMMARY

In view of this, embodiments of the present disclosure provide a settlement method and apparatus based on a digital currency wallet system, and the digital currency wallet system, which can reduce transaction costs, shorten the settlement cycle, avoid the defects of frequent manual operations and high operational risks, and improve the efficiency of fund settlement.

According to one aspect of the embodiments of the present disclosure, a settlement method based on a digital currency wallet system is provided.

A settlement method based on a digital currency wallet system is applied to an umbrella-structured wallet operating institution, and includes: opening an umbrella-top wallet and one or more umbrella-bottom wallets corresponding to the umbrella-top wallet; receiving a collected digital currency by using the umbrella-top wallet, and top-to-bottom fund transferring the collected digital currency to the one or more umbrella-bottom wallets; and settling a fund to one or more umbrella-bottom entities in response to one or more settlement requests, wherein the settled fund includes a top-to-bottom fund transferred digital currency and/or an account fund corresponding to a top-to-bottom fund transferred digital currency.

According to one or more embodiments of the present disclosure, the opening an umbrella-top wallet and one or more umbrella-bottom wallets corresponding to the umbrella-top wallet includes: opening the umbrella-top wallet for storing a digital currency in response to an umbrella-top wallet opening request made by an umbrella-top entity; and opening the one or more umbrella-bottom wallets for storing a digital currency and corresponding to the one or more umbrella-bottom entities in response to one or more umbrella-bottom wallet opening requests authorized by the one or more umbrella-bottom entities and made by the umbrella-top entity.

According to one or more embodiments of the present disclosure, the settling a fund to one or more umbrella-bottom entities includes: withdrawing the top-to-bottom fund transferred digital currency in the one or more umbrella-bottom wallets to a digital currency wallet or a bank settlement account bound to the one or more umbrella-bottom wallets.

According to one or more embodiments of the present disclosure, the settling a fund to one or more umbrella-bottom entities includes: in response to the one or more settlement requests, converting the top-to-bottom fund transferred digital currency in the one or more umbrella-bottom wallets back to a specific account of a payment institution associated with the umbrella-top entity; and uniformly settling an account amount in the specific account corresponding to the digital currency converted back and a pending settlement amount of an electronic payment received by the specific account to a fund account of the one or more umbrella-bottom entities.

According to one or more embodiments of the present disclosure, the converting the top-to-bottom fund transferred digital currency in the one or more umbrella-bottom wallets back to a specific account of a payment institution associated with the umbrella-top entity includes: sending the top-to-bottom fund transferred digital currency in the one or more umbrella-bottom wallets to an internal wallet of the umbrella-structured wallet operating institution; and converting a digital currency in the internal wallet back to an internal account of the umbrella-structured wallet operating institution, and then transferring, to the specific account, an account amount in the internal account corresponding to the digital currency converted back from the internal wallet.

According to one or more embodiments of the present disclosure, the settling a fund to one or more umbrella-bottom entities includes: in response to the one or more settlement requests, converting the top-to-bottom fund transferred digital currency in the one or more umbrella-bottom wallets back to an internal account of the umbrella-structured wallet operating institution; and uniformly settling an account amount in the internal account corresponding to a digital currency converted back and a pending settlement amount of an electronic payment received by the internal account to a fund account of the one or more umbrella-bottom entities.

According to one or more embodiments of the present disclosure, the settling a fund to the one or more umbrella-bottom entities includes: in response to the one or more settlement requests, transferring the top-to-bottom fund transferred digital currency in the one or more umbrella-bottom wallets to an internal wallet of the umbrella-structured wallet operating institution; and uniformly settling an amount of a digital currency received by the internal wallet, and a pending settlement amount of an electronic payment correspondingly converted out from the internal wallet to a digital currency wallet associated with the one or more umbrella-bottom wallets.

According to one or more embodiments of the present disclosure, the one or more settlement requests are initiated in any of the following ways: initiated by the one or more umbrella-bottom entities through an umbrella-top entity corresponding to the umbrella-top wallet, initiated by an umbrella-top entity with the authorization of the one or more umbrella-bottom entities, initiated by the umbrella-structured wallet operating institution according to an agreement, and initiated by a smart contract.

According to one or more embodiments of the present disclosure, the method further includes: in response to a cancellation request sent by an umbrella-top entity corresponding to the umbrella-top wallet to the umbrella-structured wallet operating institution, canceling the umbrella-top wallet or the one or more umbrella-bottom wallets requested to be canceled.

According to one or more embodiments of the present disclosure, when the umbrella-top wallet is requested to be canceled, and before canceling the umbrella-top wallet, determining that all the one or more umbrella-bottom wallets corresponding to the umbrella-top wallet have been canceled and that there is no digital currency balance in the umbrella-top wallet as well as no corresponding pending transactions.

According to one or more embodiments of the present disclosure, the top-to-bottom fund transferring the collected digital currency to the one or more umbrella-bottom wallets includes: top-to-bottom fund transferring the collected digital currency to a corresponding umbrella-bottom wallet based on collection information and business elements, where the collection information includes a collection amount and an identifier of an umbrella-bottom wallet associated with the collection amount; and the business elements are pre-agreed between an umbrella-top entity corresponding to the umbrella-top wallet and the umbrella-bottom entities, including at least one of the following: an allocation cycle, a commission ratio, return rules, freight and insurance collection rules, and advance fund repayment rules.

According to one or more embodiments of the present disclosure, the top-to-bottom fund transferring the collected digital currency to the one or more umbrella-bottom wallets includes: when the collected digital currency is top-to-bottom fund transferred according to a pre-agreed commission ratio, top-to-bottom fund transferring the collected digital currency into the one or more umbrella-bottom wallets corresponding to the umbrella-top wallet.

According to one or more embodiments of the present disclosure, after the receiving a collected digital currency by using the umbrella-top wallet, the method further includes: in response to a refund request, returning refunded funds from the umbrella-top wallet along an original route.

According to one or more embodiments of the present disclosure, before the returning refunded funds from the umbrella-top wallet along an original route, the method further includes: receiving advance funds supplemented to the umbrella-top wallet by the umbrella-top entity corresponding to the umbrella-top wallet when a digital currency balance of the umbrella-top wallet is less than the refunded funds.

According to one or more embodiments of the present disclosure, before the top-to-bottom fund transferring the collected digital currency to the one or more umbrella-bottom wallets, the method further includes: offsetting the advance funds when the umbrella-top entity corresponding to the umbrella-top wallet replenishes the umbrella-top wallet with the advance funds.

According to one or more embodiments of the present disclosure, the method further includes: maintaining relevant information of the corresponding umbrella-top wallet or umbrella-bottom wallet in response to a maintenance request for the umbrella-top wallet or the umbrella-bottom wallet, the relevant information including information of a wallet owner.

According to another aspect of the embodiments of the present disclosure, a settlement system based on a digital currency wallet system is provided.

A settlement system based on a digital currency wallet system is applied to an umbrella-structured wallet operating institution, and includes: a wallet opening subsystem configured to open an umbrella-top wallet and one or more umbrella-bottom wallets corresponding to the umbrella-top wallet; a collection top-to-bottom fund transferring subsystem configured to receive a collected digital currency by using the umbrella-top wallet, and allocate the collected digital currency to the one or more umbrella-bottom wallets; and a settlement subsystem configured to settle a fund to one or more umbrella-bottom entities in response to one or more settlement requests, where the settled fund includes a top-to-bottom fund transferred digital currency and/or an account fund corresponding to a top-to-bottom fund transferred digital currency.

According to yet another aspect of the embodiments of the present disclosure, a digital currency wallet system is provided.

A digital currency wallet system adopts an umbrella-structured wallet structure, and the umbrella-structured wallet structure includes an umbrella-top wallet and umbrella-bottom wallets, one umbrella-top wallet corresponding to one or more umbrella-bottom wallets; the umbrella-top wallet is configured to receive a collected digital currency and send the collected digital currency to the one or more umbrella-bottom wallets by top-to-bottom fund transferring; and the one or more umbrella-bottom wallets are configured to receive the top-to-bottom fund transferred digital currency, wherein after one or more settlement requests are made, the top-to-bottom fund transferred digital currency is settled to one or more umbrella-bottom entities in a form of digital currency and/or an account fund.

According to yet another aspect of the embodiments of the present disclosure, an electronic device is provided.

The electronic device includes: one or more processors; and a memory, configured to store one or more programs. The one or more programs, when executed by the one or more processors, cause the one or more processors to implement the settlement method based on the digital currency wallet system according to the embodiments of the present disclosure.

According to yet another aspect of the embodiments of the present disclosure, a computer-readable medium is provided.

The computer-readable medium has a computer program stored thereon, and the computer program, when executed by a processor, implements the settlement method based on the digital currency wallet system according to the embodiments of the present disclosure.

Further effects of the above-mentioned non-conventional alternatives will be described below in connection with the detailed description.

### Brief Description of the Drawings

The accompanying drawings are used to better understand the present disclosure, and do not constitute an improper limitation to the present disclosure.
Fig. 1 is a schematic diagram of main steps of a settlement method based on a digital currency wallet system according to one or more embodiments of the present disclosure.
Fig. 2 is a schematic flow diagram of fund settlement of an umbrella-structured wallet according to one or more embodiments of the present disclosure.
Fig. 3 is a schematic flow diagram of consolidated settlement where an umbrella-top entity is associated with a payment institution according to one or more embodiments of the present disclosure.
Fig. 4 is a schematic flow diagram of consolidated settlement where an umbrella-top entity has no associated payment institution according to one or more embodiments of the present disclosure.
Fig. 5 is a schematic flow diagram of consolidated settlement to a digital currency wallet according to one or more embodiments of the present disclosure.
Fig. 6 is a schematic diagram of a full life cycle of an umbrella-bottom wallet according to one or more embodiments of the present disclosure.
Fig. 7 is a schematic diagram of the main composition of a settlement system based on a digital currency wallet system according to one or more embodiments of the present disclosure.
Fig. 8 is a schematic diagram of the main composition of a digital currency wallet system according to one or more embodiments of the present disclosure.
Fig. 9 is a diagram of an exemplary system architecture to which embodiments of the present disclosure may be applied.
Fig. 10 is a schematic structural diagram of a computer system suitable for implementing a terminal device or server according to an embodiment of the present application.

### Detailed Description of the Embodiments

Exemplary embodiments of the present disclosure will be described below with reference to the accompanying drawings, including details of the embodiments of the present disclosure to facilitate understanding, which should be considered merely exemplary. Therefore, those of ordinary skill in the art should be aware that various changes and modifications can be made to the embodiments described herein without departing from the scope and spirit of the present disclosure. Similarly, for clarity and conciseness, the description of well-known functions and structures is omitted from the following description.

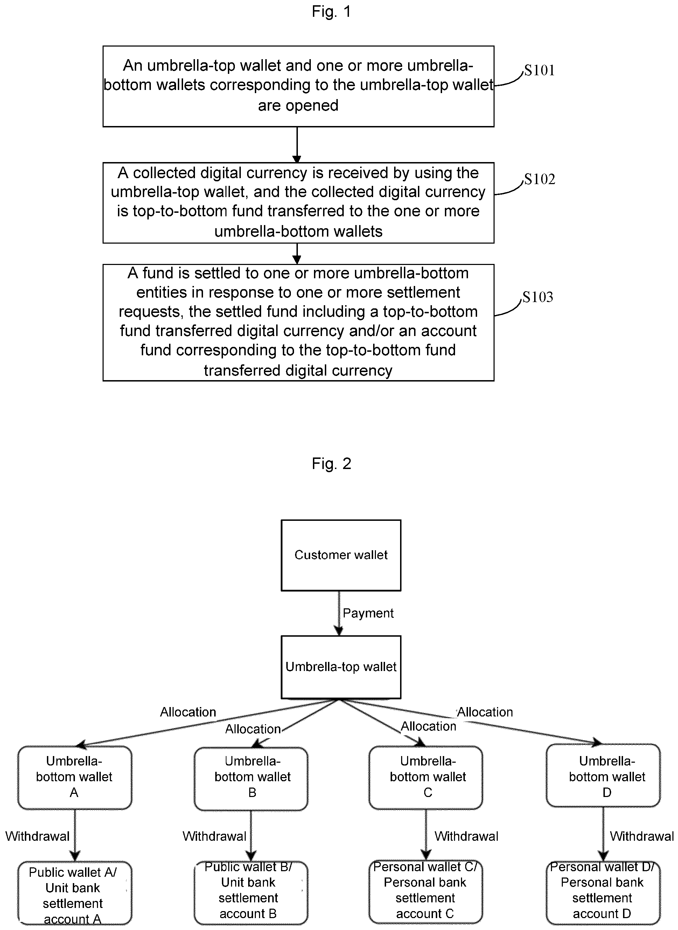

Fig. 1 is a schematic diagram of main steps of a settlement method based on a digital currency wallet system according to one embodiment of the present disclosure. As shown in Fig. 1, the settlement method based on the digital currency wallet system according to one embodiment of the present disclosure mainly includes steps S101 to S103 as follows.

Step S101: an umbrella-top wallet and one or more umbrella-bottom wallets corresponding to the umbrella-top wallet are opened.

Step S102: a collected digital currency is received by using the umbrella-top wallet, and the collected digital currency is top-to-bottom fund transferred to the one or more umbrella-bottom wallets.

Step S103: a fund is settled to one or more umbrella-bottom entities in response to one or more settlement requests, the settled fund including a top-to-bottom fund transferred digital currency and/or an account fund corresponding to the top-to-bottom fund transferred digital currency.

Digital currency is a digital form of legal currency issued by the central bank, which is operated by designated operating institutions. The digital currency is based on the broad account system, supports the loose coupling function of bank accounts, and is equivalent to physical currency, with value characteristics and legal compensation.

Operating institutions refer to commercial banks authorized by the central bank to provide digital currency exchange and circulation services directly to the public.

A wallet structure composed of an umbrella-top wallet and an umbrella-bottom wallet is an umbrella-structured wallet structure in the embodiment of the present disclosure. An umbrella-structured wallet is a special public wallet structure composed of an umbrella-top wallet and an umbrella-bottom wallet, where the umbrella-top wallet and the umbrella-bottom wallet are interdependent and cannot exist independently.

In the actual application process, the collected digital currency may be received by using the umbrella-top wallet in response to collection information, and the collection information may also be received while the collected digital currency is received by using the umbrella-top wallet. When the collected digital currency is top-to-bottom fund transferred to the one or more umbrella-bottom wallets, the allocation may be performed according to the amount of the collected digital currency and an identifier of an umbrella-bottom wallet associated with the collection amount. In order to facilitate the operation of the allocation, the allocation may be performed according to the collection information and business elements. The collection information may include a collection amount and an identifier of an umbrella-bottom wallet associated with the collection amount. The business elements are pre-agreed between an umbrella-top entity corresponding to the umbrella-top wallet and the umbrella-bottom entities, including at least one of the following: an allocation cycle, a commission ratio, return rules, freight and insurance collection rules, and advance fund repayment rules.

Top-to-bottom fund transferring the collected digital currency to the umbrella-bottom wallets may include: when the collected digital currency is top-to-bottom fund transferred according to a pre-agreed commission ratio, top-to-bottom fund transferring the collected digital currency into one or more umbrella-bottom wallets corresponding to the umbrella-top wallet.

In an embodiment, after the collected digital currency is received by using the umbrella-top wallet, the method further includes: in response to a refund request, returning a refunded fund from the umbrella-top wallet along an original route. Before returning the refunded fund from the umbrella-top wallet along an original route, if a digital currency balance of the umbrella-top wallet is less than the refunded fund, an advance fund supplemented to the umbrella-top wallet by the umbrella-top entity corresponding to the umbrella-top wallet may be received. In the event that the umbrella-top entity corresponding to the umbrella-top wallet supplements the umbrella-top wallet with the advance fund, in order to ensure the safety of the funds in the umbrella-bottom wallets, the umbrella-top wallet may not deduct the advance fund from the one or more umbrella-bottom wallets, but the advance fund is offset before the collected digital currency is top-to-bottom fund transferred to the one or more umbrella-bottom wallets.

In an embodiment, settling the fund to one or more umbrella-bottom entities may include: withdrawing the digital currency in the one or more umbrella-bottom wallets to a digital currency wallet or a bank settlement account associated with the one or more umbrella-bottom entities. Withdrawal may be the act of withdrawing recorded digital currency from the one or more umbrella-bottom wallets to associated public wallets of the same name, personal wallets of the same name, and bank settlement accounts of the same name.

In another embodiment, settling the fund to one or more umbrella-bottom entities may include: in response to the one or more settlement requests, converting the digital currency in the one or more umbrella-bottom wallets back to a specific account of a payment institution associated with the umbrella-top entity; and uniformly settling an account amount in the specific account corresponding to the digital currency converted back and a pending settlement amount of an electronic payment received by the specific account to fund accounts of the one or more umbrella-bottom entities.

The converting the digital currency in the one or more umbrella-bottom wallets back to a specific account of a payment institution associated with the umbrella-top entity may include: sending the digital currency in the one or more umbrella-bottom wallets to an internal wallet of the umbrella-structured wallet operating institution; and converting the digital currency in the internal wallet back to an internal account of the umbrella-structured wallet operating institution, and then transferring, to the specific account, an account amount in the internal account corresponding to the digital currency converted back from the internal wallet. The digital currency is converted into the account amount corresponding to the digital currency through the redemption operation.

In another embodiment, settling the fund to the one or more umbrella-bottom entities may include: converting the digital currency in the one or more umbrella-bottom wallets to an internal account of the umbrella-structured wallet operating institution in response to the settlement requests; and uniformly settling an account amount in the internal account corresponding to the digital currency converted back and a pending settlement amount of an electronic payment received by the internal account to the fund accounts of the one or more umbrella-bottom entities.

In still another embodiment, settling funds to the one or more umbrella-bottom entities may include: transferring the digital currency in the one or more umbrella-bottom wallets to an internal wallet of the umbrella-structured wallet operating institution in response to the one or more settlement requests; and uniformly settling the account amount of the digital currency received by the internal wallet and the pending settlement amount of the electronic payment correspondingly converted out from the internal wallet to the digital currency wallets bound to the one or more umbrella-bottom wallets.

The form of settling funds to the one or more umbrella-bottom entities may be determined on the basis of an account, and specifically, funds may be settled to the one or more umbrella-bottom entities in the form of digital currency or account funds.

The settlement requests are initiated in any of the following ways: initiated by the one or more umbrella-bottom entities through the umbrella-top entity corresponding to the umbrella-top wallet, initiated by the umbrella-top entity with the authorization of the one or more umbrella-bottom entities, initiated by the umbrella-structured wallet operating institution according to an agreement with the umbrella-top entity, and initiated by a smart contract.

According to the embodiments of the present disclosure, in response to a cancellation request sent by the umbrella-top entity corresponding to the umbrella-top wallet to the umbrella-structured wallet operating institution, the umbrella-top wallet or one or more umbrella-bottom wallets requested to be canceled may also be canceled.

In the event that the umbrella-top wallet is requested to be canceled, before canceling the umbrella-top wallet, it is determined that all the one or more umbrella-bottom wallets corresponding to the umbrella-top wallet have been canceled and that there is no digital currency balance in the umbrella-top wallet as well as no corresponding pending transactions.

The umbrella-top entity may open one or more umbrella-top wallets at one operating institution. In one embodiment, the opening an umbrella-top wallet and one or more umbrella-bottom wallets corresponding to the umbrella-top wallet includes: opening the umbrella-top wallet for storing digital currency in response to an umbrella-top wallet opening request made by the umbrella-top entity; and opening the one or more umbrella-bottom wallets for storing digital currency and corresponding to the umbrella-bottom entities in response to an umbrella-bottom wallet opening request authorized by the umbrella-bottom entities and made by the umbrella-top entity.

In the embodiment of the present disclosure, relevant information of the corresponding umbrella-top wallet or umbrella-bottom wallet may be maintained in response to a maintenance request for the umbrella-top wallet or the umbrella-bottom wallet, the relevant information including information of a wallet owner.

Under the digital currency system, based on the characteristics of settlement and account loose coupling of digital currency payment, the problem about efficient allocation and settlement of funds under complex scenarios may be solved, the fund and account relationship between multi-level organizations is clearly shown, higher-level organizations are supported to master transaction of lower-level units in time, and the internal account reconciliation, management, and auditing of each organization are facilitated. In the embodiment of the present disclosure, in the digital currency system, the umbrella-structured wallet is used to deal with fund settlement among a number of entities having frequent financial transactions, for example, merchant allocation settlement processing between a platform enterprise and operators in the platform, internal fund settlement of group enterprises, settlement between a company and authorized distribution stores, settlement between all levels of financial budget departments, settlement between a financial company and member departments, settlement between associated entities in a specific industry, multi-entity settlement relationship processing, etc. The embodiments of the present disclosure can facilitate the digital currency settlement between enterprises, institutions, groups, other institutions and individual business households that have frequent financial relationships, reduce transaction costs and improve the efficiency of clearing and settlement.

Fig. 2 is a schematic flow diagram of fund settlement of an umbrella-structured wallet according to one embodiment of the present disclosure. As shown in Fig. 2, in the fund collection and allocation scenario of a digital currency umbrella-structured wallet, a customer wallet pays the digital currency to an umbrella-top wallet, and the umbrella-top wallet executes collection. After the customer completes the payment, the umbrella-top wallet receives the collected digital currency, and collected funds of umbrella-bottom entities uniformly enter the umbrella-top wallet based on legal authorization or valid agreement. The umbrella-top entity agrees in advance with the umbrella-bottom entities on business elements, including the charging standard and period of the aspects such as allocation cycle, commission deduction and return of goods, and informs an operating institution that opens the umbrella-structured wallet. The umbrella-structured wallet is opened by the application of the umbrella-top entity. During allocation, the umbrella-top entity generates corresponding allocation documents based on the business elements, such as commission deduction and freight and insurance charges, agreed upon with the umbrella-bottom entities, and provides same to the operating institution that opens the umbrella-top wallet, and the operating institution matches business information and fund information and then allocates funds to the corresponding umbrella-bottom wallets based on a processing logic agreed upon in advance. The business information refers to information related to the allocation and determined based on the business elements, and the specific content of the business information is determined based on business requirements. The matching of the business information and the fund information is to determine the digital currency and the amount top-to-bottom fund transferred from the umbrella-top wallet to each umbrella-bottom wallet.

The umbrella-bottom entities initiate the settlement requests to the operating institution through the umbrella-top entity, and the operating institution may audit the settlement requests, such as auditing the legality of the identity of the umbrella-top entity, and auditing whether the amount of funds specified in the settlement requests meets predetermined requirements. The specific content of the auditing is based on the business, which is not limited in the embodiments of the present disclosure. After determining that the auditing has been approved, the funds in the umbrella-bottom wallets are withdrawn to an associated digital currency wallet or bank settlement account. The associated digital currency wallet may be a digital currency public wallet or a digital currency personal wallet, and the associated bank settlement account may be a group bank settlement account or a personal bank settlement account.

The funds in the customer wallet, the umbrella-top wallet, the umbrella-bottom wallets (an umbrella-bottom wallet A, an umbrella-bottom wallet B, an umbrella-bottom wallet C, and an umbrella-bottom wallet D), the counterparty wallet (e.g., a counterparty wallet A, a counterparty wallet B, and a counterparty wallet C in Fig. 2), and personal wallets (e.g., a personal wallet D in Fig. 2) are all digital currency.

Taking a merchant allocation settlement processing scenario between a platform enterprise and operating institutions of the platform as an example, embodiments of the present disclosure support the withdrawal of digital currency after completion of the allocation settlement in entities to the associated digital currency wallets or bank settlement accounts, wherein the entities include the entities respectively attributable to the platform enterprise, merchants, and other entities that may be involved in the allocation settlement (e.g., insurance companies providing freight insurance, and other entities that jointly contribute to marketing), where the platform enterprise, in this example, may be an example of the umbrella-top entity, and the merchants and other entities that may participate in the allocation settlement may be examples of the umbrella-bottom entities.

The embodiments of the present disclosure may support withdrawing the funds collected and escrowed in the umbrella-top wallet to the designated bank settlement account of the umbrella-bottom entity upon request, and carrying out the consolidated settlement to the umbrella-bottom entity in the form of the funds in the bank account. This is specifically categorized into the following two cases:
Case 1: The umbrella-top entity is associated with a payment institution. Embodiments of the present disclosure support the operating institution to, after auditing the settlement requests (e.g., auditing the legitimacy of the identity of the umbrella-top entity, and whether the amount of funds specified in the fund settlement requests meets the predetermined requirements, the specific content of the auditing being based on the business and being not limited in the embodiments of the present disclosure), through a centralized depository reserve account (referred to as a reserve account) at the central bank of the payment institution associated with the umbrella-top entity, consolidate the funds applied for settlement by the umbrella-bottom entities with the pending settlement funds of electronic payment, and settle the funds to designated bank settlement accounts of the umbrella-bottom entities by way of consolidated settlement through a digital RMB connectivity platform or other clearing institutions, in a manner including, but not limited to, opening an internal wallet and an internal account by the operating institution, collecting the settled funds through the internal wallet of the operating institution and converting same to the internal account of the operating institution, and then transferring same to a provision account of the payment institution from the internal account of the operating institution, and then carrying out subsequent consolidated settlement of funds.

This process is as follows: in response to the settlement requests, the digital currency in the umbrella-bottom wallets is sent to the internal wallet of the operating institution; the digital currency in the internal wallet is converted back to the internal account of the operating institution by the operating institution, and the account amount in the internal account corresponding to the digital currency converted back from the internal wallet is transferred to the specific account; the account amount in the specific account corresponding to the digital currency converted back and the pending settlement amount of the electronic payment received by the specific account are uniformly settled to the fund accounts of the umbrella-bottom entities by the operating institution through the digital RMB connectivity platform or other clearing institutions. The specific account is, for example, the provision account of the payment institution.

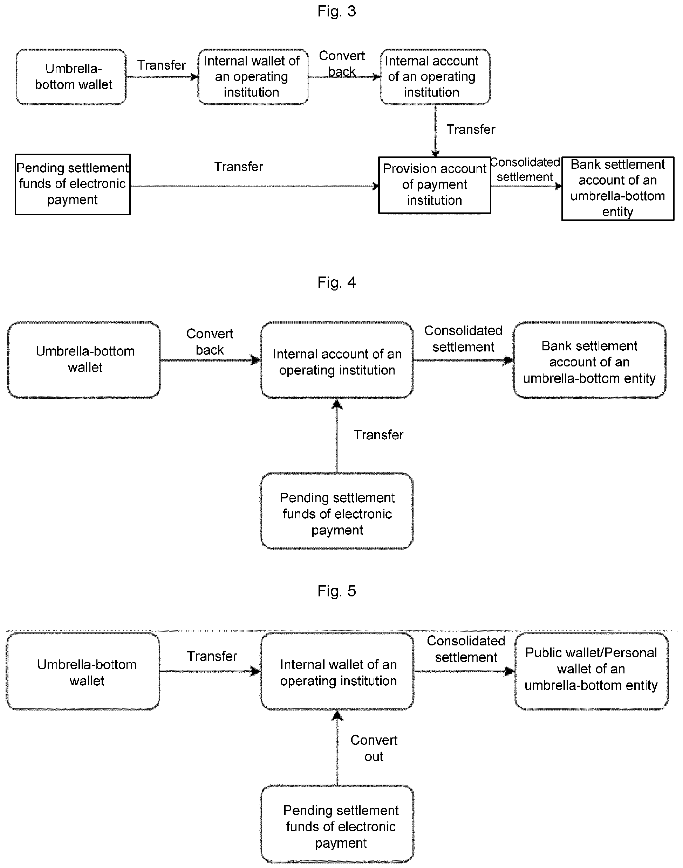

Fig. 3 shows a schematic flow diagram of consolidated settlement in the event that the umbrella-top entity is associated with the payment institution according to an embodiment of the present disclosure. The digital currency in the umbrella-bottom wallets is transferred (sent) to the internal wallet of the operating institution, and then converted back to the internal account of the operating institution. The internal account of the operating institution is a kind of fund account, in which not the digital currency but account information is stored. Converting back refers to the conversion of digital currency into account information, specifically an account amount, and fund accounts such as bank accounts. The account amount in the internal account of the operating institution is transferred to the provision account of the payment institution, and the pending settlement amount of the electronic payment and the account amount transferred from the internal account of the operating institution are uniformly settled (i.e., consolidated settlement) from the provision account of the payment institution to the fund accounts, such as bank accounts, of the umbrella-bottom entities through the digital RMB connectivity platform or other clearing institutions. Customers may make payments to the umbrella-bottom entities by means of electronic payment or digital currency payment, where electronic payment transfers the account information of the fund account, digital currency payment transfers the digital currency, and the pending settlement amount of the electronic payment is transferred to the provision account of the payment institution at the time of the electronic payment.

Case 2: The umbrella-top entity has no associated payment institution. Embodiments of the present disclosure support the operating institution to consolidate the funds applied for settlement by the umbrella-bottom entities with pending settlement funds of electronic payment after auditing the settlement requests, and settle the funds to the designated bank settlement accounts of the umbrella-bottom entities by way of consolidated settlement through the digital RMB connectivity platform or other clearing institutions, in a manner including, but not limited to, opening an internal account by the operating institution to collect the settled funds converted back as well as advance funds to pay for the pending settlement funds, and then carrying out the subsequent consolidated settlement of funds.

This process is as follows: in response to the settlement requests, the digital currency in the umbrella-bottom wallets is converted back to the internal account of the operating institution; and the account amount in the internal account corresponding to the digital currency converted back and the pending settlement amount of the electronic payment received by the internal account are uniformly settled to the fund accounts of the umbrella-bottom entities by the operating institution through the digital RMB connectivity platform or other clearing institutions.

Fig. 4 shows a schematic flow diagram of consolidated settlement in the event that the umbrella-top entity has no associated payment institution according to an embodiment of the present disclosure. The digital currency in the umbrella-bottom wallets is converted back to the internal account of the operating institution. The internal account of the operating institution stores account information, and the redemption refers to the conversion of the digital currency into the account amount. The pending settlement amount of the electronic payment and the account amount converted back from the digital currency in the umbrella-bottom wallets are uniformly settled (i.e., consolidated and settled) from the internal account of the operating institution to the fund accounts, such as bank accounts, of the umbrella-bottom entities through the digital RMB connectivity platform or other clearing institutions. The cumulative settlement amount of the umbrella-bottom entities may not exceed the available balance of the umbrella-bottom wallets.

Embodiments of the present disclosure may also support withdrawing funds collected and escrowed in the umbrella-top wallet to digital currency wallets associated with the umbrella-bottom entities upon request, and making consolidated settlement to the umbrella-bottom entities in the form of digital currency wallet funds.

Embodiments of the present disclosure support the operating institution to consolidate the funds applied for settlement by the umbrella-bottom entities with the pending settlement funds of electronic payment after auditing the settlement requests, and settle the funds to the digital currency wallets associated with the umbrella-bottom entities by way of consolidated settlement through the digital RMB connectivity platform or other clearing institutions, in a manner including, but not limited to, opening an internal wallet by the operating institution to collect the settlement funds through the internal wallet of the operating institution, and then carrying out the subsequent consolidated settlement of funds.

This process is as follows: in response to the settlement requests, the digital currency in the umbrella-bottom wallets is sent to the internal wallet of the operating institution; and the account amount of the digital currency received by the internal wallet and the pending settlement amount of the electronic payment correspondingly converted out from the internal wallet are uniformly settled to the digital currency wallets bound to the umbrella-bottom wallets by the operating institution through the digital RMB connectivity platform or other clearing institutions.

Fig. 5 shows a schematic flow diagram of consolidated settlement to digital currency wallets according to an embodiment of the present disclosure. The digital currency in the umbrella-bottom wallets is transferred (sent) to the internal wallet of the operating institution. The pending settlement amount of the electronic payment and the account amount transferred from the digital currency in the umbrella-bottom wallets are uniformly settled (i.e., consolidated and settled) from the internal wallet of the operating institution to the digital currency wallets associated with the umbrella-bottom entities, for example, public wallets or personal wallets, through the digital RMB connectivity platform or other clearing institutions.

Embodiments of the present disclosure realize efficient fund allocation and digital currency settlement for multiple levels and multiple entities. For the fund settlement among multiple entities that have frequent fund transactions with each other, the use of umbrella-structured wallets can effectively improve the efficiency of fund allocation and settlement. Umbrella-bottom wallets and public/personal wallets may be opened remotely, and batch opening of umbrella-bottom wallets on the side of the operating institution is supported, which effectively reduces the business complexity of digital currency acceptance access for B-side (enterprise-side) users. In addition, a flexible fund settlement method, which can realize unified collection and settlement of electronic payment and digital currency payment, is achieved, thereby facilitating account reconciliation of umbrella-bottom entities and improving customer experience. The embodiments of the present disclosure are innovative in the application scenarios of a digital currency public wallet, and are universal in a variety of scenarios, including, but not limited to, merchant allocation settlement processing between a platform enterprise and operators of the platform, internal fund settlement of a group enterprise, settlement between a company and authorized distribution stores, settlement between financial and budgetary departments at all levels, settlement between a finance company and member units, settlement between associated entities of a specific industry, settlement between an acceptance service agency with merchants, and settlement between a merchant and a technical service provider.

The umbrella-top wallet of the embodiments of the present disclosure is a digital currency wallet applied for by the umbrella-top entity to the operating institution for temporarily storing the pending settlement transaction funds of the umbrella-bottom entities.

The opening entity of the umbrella-top wallet refers to a group entity that, based on legal authorization or a valid agreement, can legally collect and manage monetary funds on behalf of other parties (enterprises, public institutions, individual business households, etc.), for example, a platform enterprise in a merchant allocation settlement scenario between a platform enterprise and an operator of the platform, a group company in the internal fund settlement scenario of a group enterprise, a head office in a settlement scenario between a head office and an authorized distribution store, the highest-level financial and budgetary department in the settlement scenario between financial and budgetary departments at all levels (which is determined according to specific application scenarios, for example, national financial institutions), a group financial company in the settlement scenario between a group financial company and member units, a core entity in the settlement scenario between associated entities of a specific industry, an accepting service organization in the settlement scenario between an acceptance service agency and merchants, a merchant in the settlement scenario between a merchant and a technical service provider (collectively referred to as "umbrella-top entity"), and the operating institution may also directly act as an opening entity of the umbrella-top wallet as needed. The umbrella-top wallet is used for temporarily storing pending settlement funds in the course of digital currency transactions.

The opening entity of the umbrella-bottom wallet refers to a group entity that, based on legal authorization or a valid agreement, receives and manages monetary funds on behalf of other parties, for example, merchants in the merchant allocation settlement scenario between a platform enterprise and operators of the platform, lower-level companies in the internal fund settlement scenario of a group enterprise, authorized distribution stores in the settlement scenario between a head office and authorized distribution stores, subordinate finance and budget departments in the settlement scenario between financial and budgetary departments at all levels, member units in the settlement scenario between a group finance company and member units, affiliated entities in the settlement scenario between affiliated entities of a specific industry, merchants in the settlement scenario between an acceptance service agency and merchants, and a technical service provider in the settlement scenario between a merchant and a technical service provider (collectively referred to as "umbrella-bottom entity").

The present disclosure embodiments support the umbrella-top entity to apply for opening an umbrella-bottom wallet for the purpose of collecting commissions and the like, for example, in the merchant allocation settlement processing scenario between a platform enterprise and operators in the platform, the platform enterprise may apply to the operating institution to open an umbrella-bottom wallet for self-operated merchant settlement, commission settlement, and the like, but the embodiments of the present disclosure are not limited to this scenario. The umbrella-bottom wallet is used to record the digital currency belonging to each entity after the completion of the allocation, and may be associated with a digital currency public wallet or personal wallet of the corresponding entity for business processing. The umbrella-top wallet and the umbrella-bottom wallet may have a one-to-many relationship, and a plurality of umbrella-bottom wallets may be opened under the umbrella-top wallet according to the actual needs of the business.

The digital currency in the umbrella-top wallet is held in trust by the operating institution and shared by the umbrella-top entity and the umbrella-bottom entities before settlement. If the umbrella-top entity has already opened a unit bank settlement basic account at the operating institution, the present disclosure supports the operating institution to verify the validity, authenticity and completeness of relevant information already submitted by a customer when opening the account, as well as the consistency between an applicant for wallet opening and the person to which group certification documents belong, and the authenticity of the wallet opening willingness, without requiring the umbrella-top entity to submit the information repeatedly. After the umbrella-top wallet is opened, the umbrella-top entity may apply to the operating institution to maintain information of the umbrella-top wallet, such as information of a legal representative or person in charge thereof and contact information.

The umbrella-bottom entity authorizes the umbrella-top entity to apply to the operating institution through the connectivity platform to open an umbrella-bottom wallet for the umbrella-bottom entity for the purpose of fund allocation, refund processing, etc., in accordance with efficient agreements or the needs of business management.

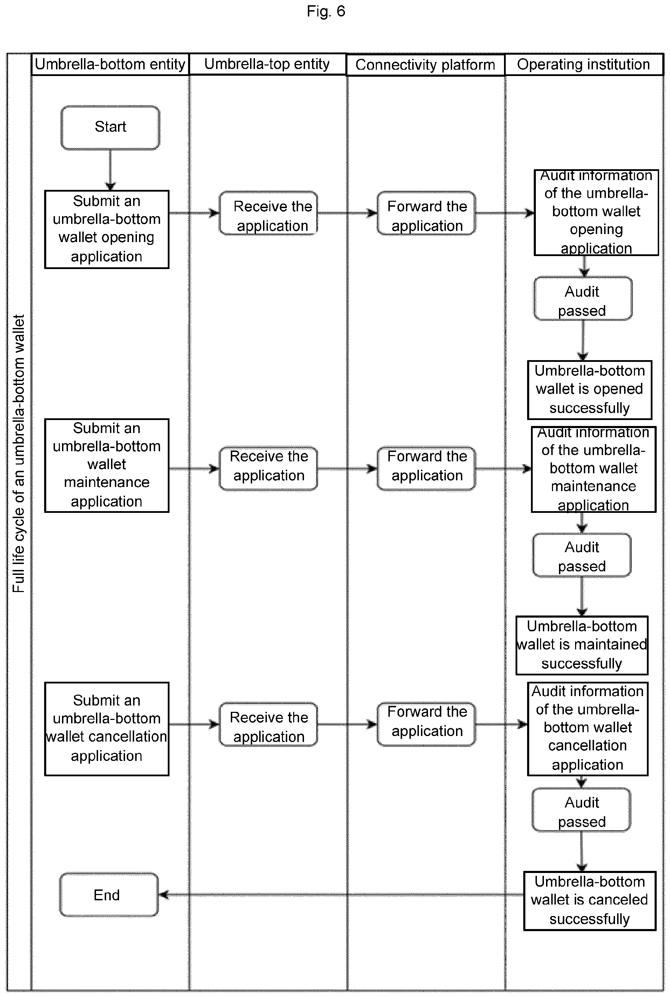

Fig. 6 is a schematic diagram of a full life cycle of an umbrella-bottom wallet according to one embodiment of the present disclosure. As shown in Fig. 6, the umbrella-bottom entity submits an umbrella-bottom wallet opening application, the umbrella-top entity accepts the application and forwards the application to the operating institution via the connectivity platform, the operating institution audits information of the umbrella-structured wallet opening application, and after the audit is passed, the umbrella-bottom wallet is opened successfully. The connectivity platform may be a platform for forwarding transaction-related applications or instructions. After the umbrella-bottom wallet is opened, the umbrella-bottom entity may apply to the operating institution via the umbrella-top entity to maintain information of the umbrella-bottom wallet, such as information of a legal representative or person in charge thereof and contact information. The present disclosure supports the umbrella-top entity to assist the operating institution in providing public/personal wallet opening services for the umbrella-bottom entities through application program interfaces (APIs) and other means.

For example, in a merchant allocation settlement processing scenario between a platform enterprise and operators of the platform, embodiments of the present disclosure support the platform enterprise to apply for the opening of an umbrella-bottom wallet for a merchant that has been enrolled in the network according to an agreement with the merchant; and a new operator applies for enrollment in the platform enterprise, the platform enterprise may apply for opening of an umbrella-bottom wallet and merchant registration for the operator at the same time according to the agreement. The data for the opening of the umbrella-bottom wallet and merchant registration shall include the identification information of a merchant, identification information of a legal representative or person in charge, collection information, contact information of the merchant, information of merchant authorization to the platform enterprise, and images of relevant documents, etc. The operating institution completes the opening of the umbrella-bottom wallet and merchant registration at the same time after passing the audit. After the completion of the opening of the umbrella-bottom wallet and the merchant registration, the merchant may apply to the operating institution through the platform enterprise to maintain the information of the legal representative or person in charge, the contact information and other information.

When the umbrella-bottom wallet is maintained, the umbrella-bottom entity submits an umbrella-structured wallet maintenance application, the umbrella-top entity accepts the application and forwards the application to the operating institution via the connectivity platform, the operating institution audits information of the umbrella-bottom wallet maintenance application, and after the audit is passed, the umbrella-bottom wallet is maintained successfully. The maintenance of the umbrella-bottom wallet includes, but is not limited to, operations such as adding, deleting, modifying, and inquiring about relevant information of the umbrella-bottom wallet, and the content of the maintenance is based on the business requirements, which is not limited in the embodiments of the present disclosure.

The umbrella-bottom entity may associate the umbrella-bottom wallet with a corresponding public wallet of the same name, and if the umbrella-bottom entity is an individual businessman or a natural person, the umbrella-bottom wallet may be associated with a corresponding personal wallet of the same name. Embodiments of the present disclosure support the operating institution to provide the umbrella-bottom entity with a public/personal wallet remote opening service. The operating institution may verify the validity, authenticity and completeness of relevant information already submitted by a customer when opening the account, as well as the consistency between an applicant for wallet opening and the person to which unit certification documents belong, and the authenticity of the wallet opening intention, without requiring the umbrella-bottom entity to submit the information repeatedly. The operating institution may set a balance limit and a payment limit for the customer based on risk considerations.

Embodiments of the present disclosure also support the umbrella-bottom entity to initiate an umbrella-bottom wallet cancellation request. For example, the umbrella-bottom entity submits the umbrella-bottom wallet cancellation request, the umbrella-top entity accepts the application and forwards the application to the operating institution via the connectivity platform, the operating institution audits information of the umbrella-bottom wallet cancellation request, and after the audit is passed, the umbrella-bottom wallet is canceled successfully. After the umbrella-bottom wallet is canceled, the association relationship with the umbrella-top wallet and the association relationship with the public/personal wallet are automatically canceled.

Embodiments of the present disclosure also support the umbrella-top entity to initiate an umbrella-top wallet cancellation request. Before the umbrella-top wallet is canceled, it should be ensured that all originally associated umbrella-bottom wallets have been canceled, and the umbrella-top wallet has no balance or pending transactions.

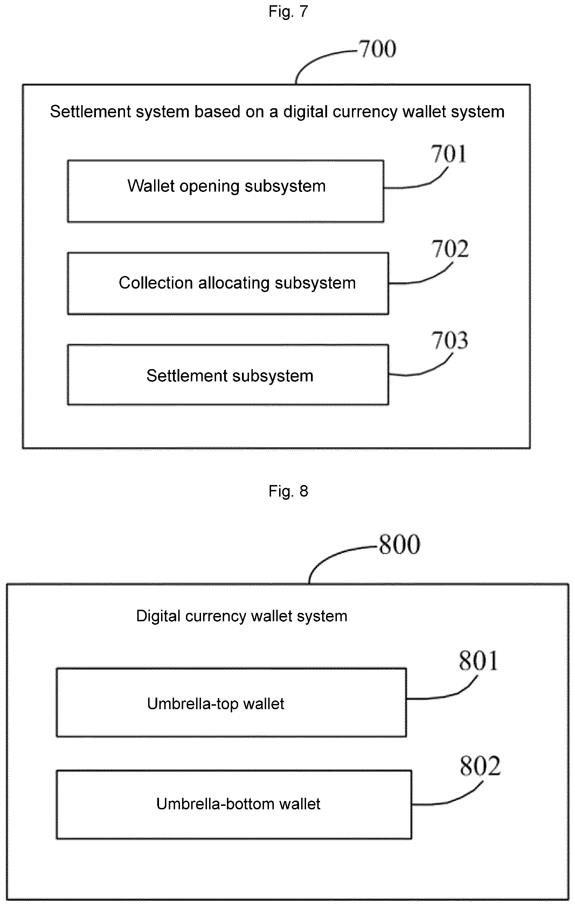

Fig. 7 is a schematic diagram of the main composition of a settlement system based on a digital currency wallet system according to one embodiment of the present disclosure.

As shown in Fig. 7, the settlement system 700 based on the digital currency wallet system according to one embodiment of the present disclosure mainly includes: a wallet opening subsystem 701, a collection top-to-bottom fund transferring subsystem 702, and a settlement subsystem 703.

The wallet opening subsystem 701 is configured to open an umbrella-top wallet and one or more umbrella-bottom wallets corresponding to the umbrella-top wallet.

The collection top-to-bottom fund transferring subsystem 702 is configured to receive collected digital currency by using the umbrella-top wallet, and allocate the collected digital currency to the one or more umbrella-bottom wallets.

The settlement subsystem 703 is configured to settle funds to umbrella-bottom entities in response to settlement requests, the settled funds including the top-to-bottom fund transferred digital currency and/or account funds corresponding to the top-to-bottom fund transferred digital currency.

The form of settling funds to the umbrella-bottom entities may be determined on the basis of an account, and for example, funds may be settled to the umbrella-bottom entities in the form of digital currency or account funds.

The collection top-to-bottom fund transferring subsystem 702 may allocate the collected digital currency to the corresponding umbrella-bottom wallets based on collection information and business elements. The collection information includes a collection amount and an identifier of an umbrella-bottom wallet associated with the collection amount; and the business elements are pre-agreed between an umbrella-top entity corresponding to the umbrella-top wallet and the umbrella-bottom entities, including at least one of the following: an allocation cycle, a commission ratio, return rules, freight and insurance collection rules, and advance fund repayment rules.

The collection top-to-bottom fund transferring subsystem 702 is configured to: allocate, when the collected digital currency is top-to-bottom fund transferred according to a pre-agreed commission ratio, the collected digital currency into one or more umbrella-bottom wallets corresponding to the umbrella-top wallet.

In an embodiment, the collection top-to-bottom fund transferring subsystem 702 may be further configured to: return, after receiving the collected digital currency by using the umbrella-top wallet, refunded funds from the umbrella-top wallet along an original route in response to a refund request.

In another embodiment, the collection top-to-bottom fund transferring subsystem 702 may be configured to: receive, before returning the refunded funds from the umbrella-top wallet along the original route, advance funds replenished to the umbrella-top wallet by the umbrella-top entity corresponding to the umbrella-top wallet in the event that a digital currency balance of the umbrella-top wallet is less than the refunded funds.

In still another embodiment, the collection top-to-bottom fund transferring subsystem 702 may be configured to: offset, prior to top-to-bottom fund transferring the collected digital currency to the umbrella-bottom wallets, the advance funds in the event that the umbrella-top entity corresponding to the umbrella-top wallet replenishes the umbrella-top wallet with the advance funds.

In an embodiment, the settlement subsystem 703 is configured to: withdraw, through the operating institution, the digital currency in the umbrella-bottom wallets to digital currency wallets or bank settlement accounts bound to the umbrella-bottom wallets.

In another embodiment, the settlement subsystem 703 is configured to: convert the digital currency in the umbrella-bottom wallets to a specific account of a payment institution associated with the umbrella-top entity in response to the settlement requests; and uniformly settle an account amount in the specific account corresponding to the digital currency converted back and a pending settlement amount of an electronic payment received by the specific account to fund accounts of the umbrella-bottom entities through a digital RMB connectivity platform or other clearing institutions.

The settlement subsystem 703 is further configured to: send the digital currency in the umbrella-bottom wallets to an internal wallet of the umbrella-structured wallet operating institution in response to the settlement requests; and convert the digital currency in the internal wallet back to an internal account of the umbrella-structured wallet operating institution, and then transfer, to the specific account, an account amount in the internal account corresponding to the digital currency converted back from the internal wallet.

In yet another embodiment, the settlement subsystem 703 is configured to: convert the digital currency in the umbrella-bottom wallets back to an internal account of the umbrella-structured wallet operating institution in response to the settlement requests; and uniformly settle an account amount in the internal account corresponding to the digital currency converted back and a pending settlement amount of an electronic payment received by the internal account to fund accounts of the umbrella-bottom entities through the digital RMB connectivity platform or other clearing institutions.

In still another embodiment, the settlement subsystem 703 is configured to: transfer the digital currency in the umbrella-bottom wallets to an internal wallet of the umbrella-structured wallet operating institution in response to the settlement requests; and uniformly settle the account amount of the digital currency received by the internal wallet and the pending settlement amount of the electronic payment correspondingly converted out from the internal wallet to the digital currency wallets bound to the umbrella-bottom wallets through the digital RMB connectivity platform or other clearing institutions.

The settlement requests are initiated in any of the following ways: initiated by the umbrella-bottom entities through the umbrella-top entity corresponding to the umbrella-top wallet, initiated by the umbrella-top entity with the authorization of the umbrella-bottom entities, initiated by the umbrella-structured wallet operating institution according to an agreement with the umbrella-top entity, and initiated by a smart contract.

The settlement system 700 based on the digital currency wallet system may further include a cancellation subsystem, configured to: cancel, in response to a cancellation request sent by the umbrella-top entity corresponding to the umbrella-top wallet to the umbrella-structured wallet operating institution, the umbrella-top wallet or umbrella-bottom wallets requested to be canceled.

The cancellation subsystem is further specifically configured to: in the event that the umbrella-top wallet is requested to be canceled, prior to canceling the umbrella-top wallet, determine that all umbrella-bottom wallets corresponding to the umbrella-top wallet have been canceled and that there is no digital currency balance in the umbrella-top wallet as well as no corresponding pending transactions.

The wallet opening subsystem 701 is configured to: open the umbrella-top wallet for storing digital currency in response to an umbrella-top wallet opening request made by the umbrella-top entity; and open the umbrella-bottom wallets for storing digital currency and corresponding to the umbrella-bottom entities in response to an umbrella-bottom wallet opening request authorized by the umbrella-bottom entities and made by the umbrella-top entity.

The settlement system 700 based on the digital currency wallet system may further include a wallet maintenance subsystem configured to: maintain relevant information of the corresponding umbrella-top wallet or umbrella-bottom wallet in response to a maintenance request for the umbrella-top wallet or the umbrella-bottom wallet, the relevant information including information of a wallet owner.

Fig. 8 is a schematic diagram of the main composition of a digital currency wallet system according to one embodiment of the present disclosure. As shown in Fig. 8, the digital currency wallet system 800 of one embodiment of the present disclosure utilizes an umbrella-structured wallet structure, the umbrella-structured wallet structure includes an umbrella-top wallet 801 and umbrella-bottom wallets 802, and the umbrella-top wallet 801 corresponds to one or more umbrella-bottom wallets 802.

The umbrella-top wallet 801 is configured to receive collected digital currency and send the collected digital currency to the umbrella-bottom wallets 802 by allocation.

The umbrella-bottom wallets 802 are configured to receive the top-to-bottom fund transferred digital currency, and upon settlement requests, the top-to-bottom fund transferred digital currency is settled to umbrella-bottom entities in the form of digital currency and/or account funds.

The umbrella-top wallet 801 may also be referred to as an umbrella-top wallet module, and the umbrella-bottom wallet 802 may also be referred to as an umbrella-bottom wallet module.

By means of the digital currency wallet system of the embodiments of the present disclosure, fund allocation and settlement among multiple entities having frequent fund transactions with each other are handled in the digital currency system. For example, firstly, the efficiency of fund allocation and settlement is improved. The operating institution opens an umbrella-top to-be-settled wallet by using the digital currency umbrella-structured wallet structure to collect digital currency funds of each scenario; and umbrella-bottom virtual wallets are opened for each subordinate unit, and establish a one-to-one association with public wallets or personal wallets of each unit, and efficient fund allocation and settlement of each scenario are realized according to fund allocation and transfer instructions, without the need for layer-by-layer downward transfers or upward transfers, thereby improving the efficiency of the internal fund flow, facilitating the financial management of units at all levels within an enterprise and reducing the risk of financial losses. Secondly, the digital currency acceptance access process is simplified. The embodiments of the present disclosure support the remote opening of umbrella-bottom wallets, and the operating institution remotely audits the customer data, identity and willingness, and completes the signing of the agreement and business processing online. Batch opening of umbrella-bottom wallets on the side of the operating institution is supported, which effectively reduces the business complexity of digital currency acceptance access for B-side users. Third, the cost of payment services is reduced. In the digital currency system, the central bank does not collect fees from operating institutions, and the operating institutions do not collect digital currency exchange service fees from customers, avoiding additional payment by customers and optimizing the business environment. In the application scenario of the digital currency umbrella-structured wallet, the cost of internal fund settlement of enterprises can be effectively reduced, and the cost of business operations is reduced. Fourth, transaction transparency is enhanced. Based on the "payment as settlement" characteristics of digital currency, digital currency transactions do not have "in transit" transactions as a traditional payment system, and cash flow and information flow match, which enhances the transaction transparency, and facilitates financial regulatory authorities to better carry out penetrating supervision.

In addition, the specific implementation contents and relevant details of the settlement system based on the digital currency wallet system and the digital currency wallet system described in the embodiments of the present disclosure have been described in detail in the settlement method based on the digital currency wallet system described above, and therefore are not repeated here.

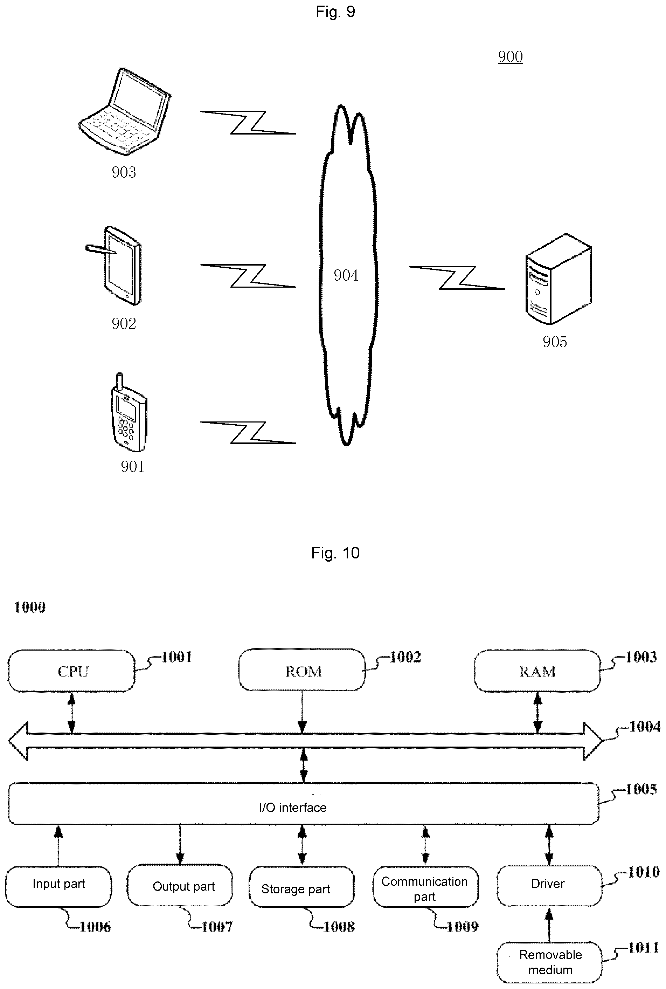

Fig. 9 illustrates an exemplary system architecture 900 to which the settlement method based on the digital currency wallet system or the settlement system based on the digital currency wallet system according to an embodiment of the present disclosure may be applied.

As shown in Fig. 9, the system architecture 900 may include terminal devices 901, 902 and 903, a network 904, and a server 905. The network 904 is used for providing a medium for a communication link between the terminal devices 901, 902 and 903 and the server 905. The network 804 may include various connection types, such as wired communication links, wireless communication links, and fiber optic cables.

Users may use the terminal devices 901, 902 and 903 to interact with the server 905 via the network 904, so as to receive or send messages, etc. Various communication client applications may be installed on the terminal devices 901, 902 and 903, such as shopping applications, web browser applications, search applications, instant messengers, email clients, and social platform software (only for illustration).

The terminal devices 901, 902 and 903 may be various electronic devices that have displays and support web browsing, including but not limited to smart phones, tablets, laptops and desktop computers, etc.

The server 905 may be a server that provides various services, such as a backend management server (only for illustration) that supports shopping websites viewed by users via the terminal devices 901, 902 and 903. The backend management server may perform analysis and other processing on received data such as a product information query request, and feed processing results (such as target push information and product information) to the terminal devices.

It should be noted that the settlement method based on the digital currency wallet system according to the embodiment of the present disclosure is generally executed by the terminal devices 901, 902 and 903 or the server 905, and accordingly, the settlement system based on the digital currency wallet system is generally provided in the terminal devices 901, 902 and 903 or the server 905.

It is to be understood that the numbers of the terminal devices, the network, and the server in Fig. 9 are merely schematic. Any number of terminal devices, networks, and servers may be provided as required by the implementation.

Reference is made below to Fig. 10, which illustrates a schematic structural diagram of a computer system 1000 suitable for implementing the terminal device or server according to the embodiment of the present application. The terminal device or server shown in Fig. 10 is only one example and should not impose any limitation on the function and scope of usage of the embodiments of the present application.

As shown in Fig. 10, the computer system 1000 includes a central processing unit (CPU) 1001 that may perform various appropriate actions and processing based on programs stored in a read-only memory (ROM) 1002 or programs loaded from a storage part 1008 into a random access memory (RAM) 1003. Programs and data required for operations of the system 1000 may be further stored in the RAM 1003. The CPU 1001, the ROM 1002 and the RAM 1003 are connected to each other via a bus 1004. An input/output (I/O) interface 1005 is also connected to the bus 1004.

The following components are connected to the I/O interface 1005: an input part 1006 including a keyboard, a mouse, etc.; an output part 1007 including a cathode ray tube (CRT), a liquid crystal display (LCD), a speaker, etc.; the storage part 1008 including a hard disk, etc.; and a communication part 1009 including network interface cards such as an LAN card and a modem. The communication part 1009 performs communication processing via a network such as the Internet. A driver 1010 is also connected to the I/O interface 1005 as needed. A removable medium 1011, such as a disk, a compact disk, a magnetic disk and a semiconductor memory, is installed on the driver 1010 as needed such that computer programs read therefrom are installed into the storage part 1008 as needed.

In particular, according to the embodiments of the present disclosure, the process described above with reference to the flow diagrams may be implemented as a computer software program. For example, the embodiments of the present disclosure include a computer program product. The computer program product includes a computer program carried on a computer-readable medium. The computer program includes a program code for performing the method shown in the flow diagrams. According to this embodiment, the computer program may be downloaded and installed from the network via the communication part 1009, and/or installed from the removable medium 1011. The computer program, when executed by the central processing unit (CPU) 1001, performs the above functions as defined in the system according to the present application.

It is to be noted that the computer-readable medium according to the present disclosure may be a computer-readable signal medium or a computer-readable storage medium or any combination of both of the above. The computer-readable storage medium may be, for example, but is not limited to, an electrical, magnetic, optical, electromagnetic, infrared, or semiconductor system, apparatus, or device, or any combination of the above. More specific examples of the computer-readable storage medium may include, but are not limited to: electrical connection via one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic memory device, or any suitable combination of the above. According to the present application, the computer-readable storage medium may be any tangible medium that includes or stores a program, and the program may be used by or in combination with an instruction execution system, apparatus, or device. According to the present application, the computer-readable signal medium may include data signals propagated in a baseband or as part of a carrier wave, in which computer-readable program codes are carried. Such propagated data signals may be in a variety of forms, including but not limited to electromagnetic signals, optical signals, or any suitable combination of the above. The computer-readable signal medium may also be any computer-readable medium other than the computer-readable storage medium, and the computer-readable medium may send, propagate, or transmit a program for use by or in conjunction with the instruction execution system, apparatus, or device. The program codes included by the computer-readable medium may be transmitted via any suitable medium, including but not limited to: wireless, wired, fiber optic cables, RF, etc., or any suitable combination of the above.

The flow diagrams and the block diagrams in the accompanying drawings illustrate possible implementations of the architecture, functionality, and operation of the system, the method, and the computer program product according to the embodiments of the present application. In this regard, each block in the flow diagrams or block diagrams may represent a module, a program segment, or part of a code, the module, the program segment, or part of the code including one or more executable instructions for implementing specified logical functions. It is also to be noted that in some alternative implementations, the functions noted in the blocks may also occur out of the order noted in the accompanying drawings. For example, two blocks shown in succession may actually be executed in parallel substantially, and sometimes they may also be executed in an inverse order, which depends upon the functionality involved. It is also to be noted that each block in the block diagrams or flow diagrams as well as a combination of blocks in the block diagrams or flow diagrams may be implemented using a special hardware-based system that executes specified functions or operations, or implemented using a combination of special hardware and computer instructions.

The modules described in the embodiments of the present disclosure may be implemented in a software-based manner or may be implemented in a hardware-based manner. The modules described may also be provided in a processor and may be described, for example, as a processor including an umbrella-top wallet module and an umbrella-bottom wallet module. The name of a module in some cases does not constitute the restriction to the module itself, for example, the umbrella-top wallet module may also be described as "a module that receives collected digital currency and sends the collected digital currency to the umbrella-bottom wallet module by allocation".

As another aspect, the present disclosure further provides a computer-readable medium, which may be included in the device described in the above embodiments, or be present separately and not fitted into the device. The computer-readable medium carries one or more programs that, when executed by one such device, cause the device to: open an umbrella-top wallet and one or more umbrella-bottom wallets corresponding to the umbrella-top wallet; receive a collected digital currency by using the umbrella-top wallet, and allocate the collected digital currency to the one or more umbrella-bottom wallets; and settle funds to one or more umbrella-bottom entities in response to settlement requests, the settled funds including the top-to-bottom fund transferred digital currency and/or account funds corresponding to the top-to-bottom fund transferred digital currency.

According to the technical solutions of the embodiments of the present disclosure, the umbrella-top wallet and one or more umbrella-bottom wallets corresponding to the umbrella-top wallet are opened, the collected digital currency is received by using the umbrella-top wallet, the collected digital currency received by the umbrella-top wallet is top-to-bottom fund transferred to the one or more umbrella-bottom wallets, and the funds are settled to the umbrella-bottom entities in response to the settlement requests. The transaction costs can be reduced, the settlement cycle is shortened, the defects of frequent manual operations and high operational risks are avoided, and the efficiency of fund settlement is improved.

The above specific embodiments do not constitute a limitation on the protection scope of the present disclosure. It will be apparent to a person skilled in the art that various modifications, combinations, sub-combinations, and substitutions may occur, depending upon design requirements and other factors. Any modification, equivalent replacement, improvement, etc. made within the spirit and principle of the present disclosure should fall within the protection scope of the present disclosure.

## Claims

1. A settlement method based on a digital currency wallet system, wherein the method is applied to an umbrella-structured wallet operating institution, and comprises:
opening an umbrella-top wallet and one or more umbrella-bottom wallets corresponding to the umbrella-top wallet;
receiving a collected digital currency by using the umbrella-top wallet, and top-to-bottom fund transferring the collected digital currency to the one or more umbrella-bottom wallets; and
settling a fund to one or more umbrella-bottom entities in response to one or more settlement requests, wherein the settled fund comprises a top-to-bottom fund transferred digital currency and/or an account fund corresponding to a top-to-bottom fund transferred digital currency.

2. The settlement method as claimed in claim 1, wherein the opening an umbrella-top wallet and one or more umbrella-bottom wallets corresponding to the umbrella-top wallet comprises:
opening the umbrella-top wallet for storing a digital currency in response to an umbrella-top wallet opening request made by an umbrella-top entity; and
opening the one or more umbrella-bottom wallets for storing a digital currency and corresponding to the one or more umbrella-bottom entities in response to one or more umbrella-bottom wallet opening requests authorized by the one or more umbrella-bottom entities and made by the umbrella-top entity.

3. The settlement method as claimed in claim 1, wherein the settling a fund to one or more umbrella-bottom entities comprises:
withdrawing the top-to-bottom fund transferred digital currency in the one or more umbrella-bottom wallets to a digital currency wallet or a bank settlement account bound to the one or more umbrella-bottom wallets.

4. The settlement method as claimed in claim 1, wherein the settling a fund to one or more umbrella-bottom entities comprises:
in response to the one or more settlement requests, converting the top-to-bottom fund transferred digital currency in the one or more umbrella-bottom wallets back to a specific account of a payment institution associated with the umbrella-top entity; and
uniformly settling an account amount in the specific account corresponding to the digital currency converted back and a pending settlement amount of an electronic payment received by the specific account to a fund account of the one or more umbrella-bottom entities.

5. The settlement method as claimed in claim 4, wherein the converting the top-to-bottom fund transferred digital currency in the one or more umbrella-bottom wallets back to a specific account of a payment institution associated with the umbrella-top entity comprises:
sending the top-to-bottom fund transferred digital currency in the one or more umbrella-bottom wallets to an internal wallet of the umbrella-structured wallet operating institution; and
converting a digital currency in the internal wallet back to an internal account of the umbrella-structured wallet operating institution, and then transferring, to the specific account,
an account amount in the internal account corresponding to the digital currency converted back from the internal wallet.

6. The settlement method as claimed in claim 1, wherein the settling a fund to one or more umbrella-bottom entities comprises:
in response to the one or more settlement requests, converting the top-to-bottom fund transferred digital currency in the one or more umbrella-bottom wallets back to an internal account of the umbrella-structured wallet operating institution; and
uniformly settling an account amount in the internal account corresponding to a digital currency converted back and a pending settlement amount of an electronic payment received by the internal account to a fund account of the one or more umbrella-bottom entities.

7. The settlement method as claimed in claim 1, wherein the settling a fund to the one or more umbrella-bottom entities comprises:
in response to the one or more settlement requests, transferring the top-to-bottom fund transferred digital currency in the one or more umbrella-bottom wallets to an internal wallet of the umbrella-structured wallet operating institution; and
uniformly settling an amount of a digital currency received by the internal wallet, and a pending settlement amount of an electronic payment correspondingly converted out from the internal wallet to a digital currency wallet bound to the one or more umbrella-bottom wallets.

8. The settlement method as claimed in claim 1, wherein the one or more settlement requests are initiated in any of the following ways: initiated by the one or more umbrella-bottom entities through an umbrella-top entity corresponding to the umbrella-top wallet, initiated by the umbrella-top entity with an authorization of the one or more umbrella-bottom entities, initiated by the umbrella-structured wallet operating institution according to an agreement, and initiated by a smart contract.

9. The settlement method as claimed in claim 1, further comprising:
in response to a cancellation request sent by an umbrella-top entity corresponding to the umbrella-top wallet to the umbrella-structured wallet operating institution, canceling the umbrella-top wallet or the one or more umbrella-bottom wallets requested to be canceled.

10. The method as claimed in claim 9, wherein when the umbrella-top wallet is requested to be canceled, and before canceling the umbrella-top wallet, determining that all the one or more umbrella-bottom wallets corresponding to the umbrella-top wallet have been canceled and that there is no digital currency balance in the umbrella-top wallet as well as no corresponding pending transactions.

11. The settlement method as claimed in claim 1, wherein the top-to-bottom fund transferring the collected digital currency to the one or more umbrella-bottom wallets comprises: top-to-bottom fund transferring the collected digital currency to a corresponding umbrella-bottom wallet based on collection information and business elements, wherein the collection information comprises a collection amount and an identifier of an umbrella-bottom wallet associated with the collection amount; and the business elements are pre-agreed between an umbrella-top entity corresponding to the umbrella-top wallet and the umbrella-bottom entities, comprising at least one of the following: an allocation cycle, a commission ratio, return rules, freight and insurance collection rules, and advance fund repayment rules.

12. The settlement method as claimed in claim 11, wherein the top-to-bottom fund transferring the collected digital currency to the one or more umbrella-bottom wallets comprises:
when the collected digital currency is top-to-bottom fund transferred according to a pre-agreed commission ratio, top-to-bottom fund transferring the collected digital currency into the one or more umbrella-bottom wallets corresponding to the umbrella-top wallet.

13. The settlement method as claimed in claim 1, wherein after the receiving a collected digital currency by using the umbrella-top wallet, the method further comprises:
in response to a refund request, returning refunded funds from the umbrella-top wallet along an original route.

14. The settlement method as claimed in claim 13, wherein before the returning refunded funds from the umbrella-top wallet along an original route, the method further comprises:
receiving advance funds supplemented to the umbrella-top wallet by the umbrella-top entity corresponding to the umbrella-top wallet when a digital currency balance of the umbrella-top wallet is less than the refunded funds.

15. The settlement method as claimed in claim 14, wherein before the top-to-bottom fund transferring the collected digital currency to the one or more umbrella-bottom wallets, the method further comprises: offsetting the advance funds when the umbrella-top entity corresponding to the umbrella-top wallet replenishes the umbrella-top wallet with the advance funds.

16. The settlement method as claimed in claim 1, further comprising: maintaining relevant information of the corresponding umbrella-top wallet or umbrella-bottom wallet in response to a maintenance request for the umbrella-top wallet or the umbrella-bottom wallet, the relevant information comprising information of a wallet owner.

17. A settlement system based on a digital currency wallet system, wherein the system is applied to an umbrella-structured wallet operating institution, and comprises:
a wallet opening subsystem configured to open an umbrella-top wallet and one or more umbrella-bottom wallets corresponding to the umbrella-top wallet;
a collection top-to-bottom fund transferring subsystem configured to receive a collected digital currency by using the umbrella-top wallet, and allocate the collected digital currency to the one or more umbrella-bottom wallets; and
a settlement subsystem configured to settle a fund to one or more umbrella-bottom entities in response to one or more settlement requests, wherein the settled fund comprises a top-to-bottom fund transferred digital currency and/or an account fund corresponding to a top-to-bottom fund transferred digital currency.

18. The settlement system as claimed in claim 17, wherein the wallet opening subsystem is further configured to:
open the umbrella-top wallet for storing a digital currency in response to an umbrella-top wallet opening request made by an umbrella-top entity; and
open the one or more umbrella-bottom wallets for storing a digital currency and corresponding to the one or more umbrella-bottom entities in response to one or more umbrella-bottom wallet opening requests authorized by the one or more umbrella-bottom entities and made by the umbrella-top entity.

19. The settlement system as claimed in claim 17, wherein the settlement subsystem is further configured to:
withdraw the top-to-bottom fund transferred digital currency in the one or more umbrella-bottom wallets to a digital currency wallet or a bank settlement account bound to the one or more umbrella-bottom wallets.

20. The settlement system as claimed in claim 17, wherein the settlement subsystem is further configured to:
in response to the one or more settlement requests, convert the top-to-bottom fund transferred digital currency in the one or more umbrella-bottom wallets back to a specific account of a payment institution associated with the umbrella-top entity; and
uniformly settle an account amount in the specific account corresponding to the digital currency converted back and a pending settlement amount of an electronic payment received by the specific account to a fund account of the one or more umbrella-bottom entities.

21. The settlement system as claimed in claim 20, wherein the settlement subsystem is further configured to:
in response to the one or more settlement requests, send the top-to-bottom fund transferred digital currency in the one or more umbrella-bottom wallets to an internal wallet of the umbrella-structured wallet operating institution; and
convert a digital currency in the internal wallet back to an internal account of the umbrella-structured wallet operating institution, and then transfer, to the specific account, an account amount in the internal account corresponding to the digital currency converted back from the internal wallet.

22. The settlement system as claimed in claim 17, wherein the settlement subsystem is further configured to:
in response to the one or more settlement requests, convert the top-to-bottom fund transferred digital currency in the one or more umbrella-bottom wallets back to an internal account of the umbrella-structured wallet operating institution; and
uniformly settle an account amount in the internal account corresponding to a digital currency converted back and a pending settlement amount of an electronic payment received by the internal account to a fund account of the one or more umbrella-bottom entities.

23. The settlement system as claimed in claim 17, wherein the settlement subsystem is further configured to:
in response to the one or more settlement requests, transfer the top-to-bottom fund transferred digital currency in the one or more umbrella-bottom wallets to an internal wallet of the umbrella-structured wallet operating institution; and
uniformly settle an amount of a digital currency received by the internal wallet, and a pending settlement amount of an electronic payment correspondingly converted out from the internal wallet to a digital currency wallet bound to the one or more umbrella-bottom wallets.

24. The settlement system as claimed in claim 17, wherein the one or more settlement requests are initiated in any of the following ways: initiated by the one or more umbrella-bottom entities through an umbrella-top entity corresponding to the umbrella-top wallet, initiated by the umbrella-top entity with an authorization of the one or more umbrella-bottom entities, initiated by the umbrella-structured wallet operating institution according to an agreement, and initiated by a smart contract.

25. The settlement system as claimed in claim 17, further comprising a cancellation subsystem configured to:
cancel, in response to a cancellation request sent by an umbrella-top entity corresponding to the umbrella-top wallet to the umbrella-structured wallet operating institution, the umbrella-top wallet or the one or more umbrella-bottom wallets requested to be canceled.

26. The settlement system as claimed in claim 25, wherein the cancellation subsystem is further configured to:
determine, when the umbrella-top wallet is requested to be canceled, and before canceling the umbrella-top wallet, that all the one or more umbrella-bottom wallets corresponding to the umbrella-top wallet have been canceled and that there is no digital currency balance in the umbrella-top wallet as well as no corresponding pending transactions.

27. The settlement system as claimed in claim 17, wherein the collection top-to-bottom fund transferring subsystem is further configured to: allocate the collected digital currency to a corresponding umbrella-bottom wallet based on collection information and business elements, wherein the collection information comprises a collection amount and an identifier of an umbrella-bottom wallet associated with the collection amount; and the business elements are pre-agreed between an umbrella-top entity corresponding to the umbrella-top wallet and the umbrella-bottom entities, comprising at least one of the following: an allocation cycle, a commission ratio, return rules, freight and insurance collection rules, and advance fund repayment rules.

28. The settlement system as claimed in claim 17, wherein the collection top-to-bottom fund transferring subsystem is further configured to:
allocate, when the collected digital currency is top-to-bottom fund transferred according to a pre-agreed commission ratio, the collected digital currency into the one or more umbrella-bottom wallets corresponding to the umbrella-top wallet.

29. The settlement system as claimed in claim 17, wherein the collection top-to-bottom fund transferring subsystem is further configured to: return, after receiving the collected digital currency by using the umbrella-top wallet, refunded funds from the umbrella-top wallet along an original route in response to a refund request.

30. The settlement system as claimed in claim 29, wherein the collection top-to-bottom fund transferring subsystem is further configured to: receive, before returning the refunded funds from the umbrella-top wallet along the original route, advance funds supplemented to the umbrella-top wallet by the umbrella-top entity corresponding to the umbrella-top wallet when a digital currency balance of the umbrella-top wallet is less than the refunded funds.

31. The settlement system as claimed in claim 30, wherein the collection top-to-bottom fund transferring subsystem is further configured to: offset, before top-to-bottom fund transferring the collected digital currency to the one or more umbrella-bottom wallets, the advance funds when the umbrella-top entity corresponding to the umbrella-top wallet replenishes the umbrella-top wallet with the advance funds.

32. The settlement system as claimed in claim 17, further comprising a wallet maintenance subsystem configured to:
maintain relevant information of the corresponding umbrella-top wallet or umbrella-bottom wallet in response to a maintenance request for the umbrella-top wallet or the umbrella-bottom wallet, the relevant information comprising information of a wallet owner.

33. A digital currency wallet system adopting an umbrella-structured wallet structure, wherein the umbrella-structured wallet structure comprises an umbrella-top wallet and umbrella-bottom wallets, and one umbrella-top wallet corresponds to one or more umbrella-bottom wallets;
the umbrella-top wallet is configured to receive a collected digital currency and send the collected digital currency to the one or more umbrella-bottom wallets by top-to-bottom fund transferring; and
the one or more umbrella-bottom wallets are configured to receive the top-to-bottom fund transferred digital currency, wherein after one or more settlement requests are made, the top-to-bottom fund transferred digital currency is settled to one or more umbrella-bottom entities in a form of digital currency and/or an account fund.

34. An electronic device, comprising:
one or more processors; and
a memory, configured to store one or more programs, wherein
the one or more programs, when executed by the one or more processors, cause the one or
more processors to implement the method as claimed in any one of claims 1 to 16.

35. A computer-readable medium, having a computer program stored thereon, wherein the computer program, when executed by a processor, implements the method as claimed in any one of claims 1 to 16.
